# EUROPEAN PATENT SPECIFICATION

(11) **EP 1 639 900 B1**
(45) Date of publication and mention of the grant of the patent: **09.12.2009**
(21) Application number: 05014277.7
(22) Date of filing: 30.06.2005
(51) Int. Cl.: A23G 9/50, B65D 85/78

(54) **Ice-cream cone holder**
Eiswaffelhalter
Support pour un cornet à crème glacée

(30) Priority: 28.09.2004 IT MI20041838
(43) Date of publication of application: 29.03.2006
(73) Proprietor: Marpe S.r.l., 34070 Capriva del Friuli GO (IT)
(72) Inventor: Marletto, Luca, 34070 Capriva del Friuli (GO) (IT)
(74) Representative: Perani, Aurelio

(56) References cited:
- EP-A- 0 709 307
- FR-A- 2 827 584
- US-A- 3 351 258
- US-A- 4 079 858
- US-B1- 6 182 854
- US-B1- 6 237 646

## Description

The present invention relates to a cone holder comprising an open hollow body for supporting an ice-cream cone partially inserted therein.

Such cone holders are generally disposable, i.e. intended for single use, in combination with the sale of edible substances in cones, such as home made ice-cream, ice-cream cakes, yogurt, whipped cream, mousse, creams, and the like.

It is particularly known to use cone holders for receiving and supporting wafer ice-cream cones.

These cone holders are mainly used to isolate the ice-cream cone from contact with the hands of those who serve the ice-cream or those who consume it, to keep it from being contaminated. In short, the ice-cream cone is introduced in the cone holder that is designed to be held in the hand of a user.

Cone holders are generally configured to have a flare next to the top opening, through which the cone is introduced, for collecting any melted ice-cream drips, thereby preventing them from falling to the ground or on the ice-cream consumer's body.

The word "ice-cream cone" as used herein is intended to define any kind of edible support for an ice-cream, particularly a wafer cone, whether this support actually has a conic shape or not. The word "cone holder" as used herein is intended to define the element for supporting an ice-cream cone partially inserted herein.

In the sale of home-made ice-cream, as well as other retail goods, a need is felt of possibly accompanying the ice-cream cone with an object, e.g. a gift, an accessory, or the like. This need is not easily fulfilled in the sale of home-made ice-cream in cones.

This mainly depends on that the lack of an enclosure for containing both the ice-cream cone and the accompanying object, poses the question on how the object may be associated to the ice-cream cone. Particularly, one of the main issues to be addressed is to assure that the object does not come out of the ice-cream cone during transportation thereof.

Another non negligible problem is the size increase possibly caused by the presence of the object. It shall be noted that, before use, ice-cream cones are stacked in a mutually inserted relationship, in such a manner as to dramatically reduce the size thereof. Apparently, the presence of an object outside the ice-cream cone forcibly involves the impossibility of stacking multiple cones in a mutually inserted relationship.

It shall be further noted that the presence of cone holders constructed according to prior art as described in US 3 351 258, although providing various advantages, is a further hindrance to the fulfillment of the above need, as the presence of the object or gift to be associated to the cone or cone holder causes a further size increase.

Therefore, this invention is based on the issue of conceiving and providing a cone holder as described hereinbefore, allowing to fulfill the above need, while obviating the above prior art drawbacks.

This problem is solved by the provision of a cone holder according to claim 1.

Further characteristics of the cone holder of this invention, as well as the advantages derived therefrom will be apparent from the following description of one preferred embodiment thereof, which is given by way of illustration and without limitation with reference to the accompanying figures, in which:
- Figure 1 is a schematic exploded view of a cone holder according to this invention, with an object to be contained therein and a cone to be supported;
- Figure 2 is a schematic view of the container of Figure 1 in the assembled condition and
- Figure 3 is a schematic sectional view taken along line III - III of Figure 2.

Referring to the accompanying figures, numeral 1 generally designates a cone holder according to the invention.

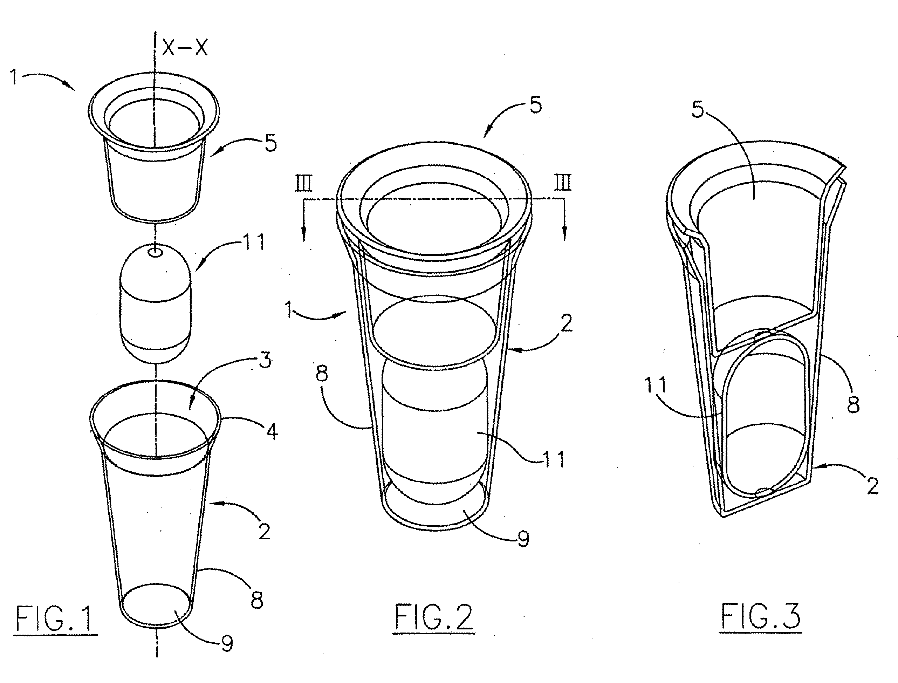

The cone holder 1 comprises an open hollow body 2 for supporting an ice-cream cone 5 partially inserted therein, as shown in Figure 2.

Preferably the hollow body 2 has an essentially truncated cone shape extending in a prevailing axial direction X-X, from a bottom wall 9 to a top opening 3 through which the ice-cream cone 5 may be partially inserted through the hollow body 2 of the cone holder 1 to be supported thereby.

Therefore, the hollow body 2 has a bottom 9 wherefrom a side wall 8 extends, the letter having the section of a circular cone diverging toward the free top end with the top opening 3. At said free top end, the side wall 8 has a flare 4, i.e. a more tapered divergent conic portion, which defines a widened portion of the hollow body, for collecting any melted ice-cream drips.

The ice-cream cone 5 is a commonly available edible cone, e.g. a cone of molded wafer. The ice-cream cone may be of various shapes and sizes, depending on the manufacturer. In the example as shown in the figures, the ice-cream cone 5 has the shape of a truncated cone.

In this respect, it shall be noted that the cone holder has such shapes and sizes as to fit the type of ice-cream cones to be supported. Hence, the cone holder of the invention may also have shapes and sizes other than those of the cone holder 1 as shown in the figures.

The cone holder 2 is made of a material suitable for direct contact with food products, e.g. a plastic material such as polystyrene (PS) or a polyethylene-coated cardboard, to avoid any hygienic or sanitary problem arising from any possible contact between the ice-cream cone 5 and the cone holder.

In accordance with an advantageous aspect, the hollow body 2 of the cone holder 1 is conformed in such a manner as to define a housing 10 in which an object 11 is removably received without interfering with the portion of the ice-cream cone 5 in the hollow body 2, as shown in Figures 2 and 3.

Preferably, the housing 10 is defined at the lower end of this hollow body 2, in the proximity of its bottom wall 9.

In fact, the hollow body 2 comprises an upper portion for receiving the portion of the ice-cream cone 5 to be introduced in the hollow body, and an underlying lower portion, for containing the object in such a manner that no interference exists between the ice-cream cone 5 and the object 11. To achieve this result, the cone holder 1 has a hollow body 2 whose axial extension is longer than that of the portion of the ice-cream cone 5 to be housed therein.

In the example that is shown in the figures, the object 11 to be contained in the housing 10 has the form of an essentially egg-shaped capsule acting as a container for other products/objects.

It will be appreciated that the egg-shaped capsule does not constitute a preferred embodiment, any other object being receivable in the housing 10, provided it has such a shape and a size as to allow its retention therein.

In this respect, it shall be noted that different shapes and sizes of the cone holder 1 may be provided, to comply with the size of the objects to be accommodated therein.

It will be understood that the object 11 to be introduced in the housing 10 may be of any nature and have any purpose, e.g. a food product, a candy or else, such as a gift, a toy, or picture cards.

Advantageously, the use of such a capsule, particularly of a capsule made of a food-grade plastic material, prevents any hygienic or sanitary problem associated to the contact possibly occurring between the ice-cream cone 5 and the object.

The capsule 11 may be introduced in the housing 10 by forcing it therein. To this purpose, the cone holder 2 may have engagement means such as a plurality of retaining teeth or tabs (not shown), for removably holding the capsule in the housing 10 and preventing it from being accidentally released therefrom.

In accordance with a preferred embodiment, the top opening 3 of the hollow body may be closed by a removable film (not shown for the sake of simplicity). To allow stacking of multiple cone holders in a mutually inserted relationship, the removable film is not stretched but has a bag-like shape, to fit the cavity of the hollow body 2 by adhering against it.

The film is used to prevent the object 11 from coming out of the hollow body 2, for instance during transportation or handling of the inventive cone holders.

According to a different embodiment, the film may be replaced by a removable partition diaphragm, e.g. a plastic or aluminum film, located in such a position as to separate the lower and upper portions of the hollow body 2.

In use, the cone holder 1 of the invention is sold to the ice-cream buyer/consumer in the condition as shown in Figure 2, i.e. with the ice-cream cone 5 partially inserted in the hollow body 2 and supported thereby, and with the object 11 in the housing 10. The ice-cream cone 5 is obviously filled with an appropriate amount of ice-cream (not shown).

Before or after eating the ice-cream, the user/consumer may draw the object 11 out of its housing 10 by simply extracting the second body 5 from the first body 2, and by drawing out the object 11 after removing any removable diaphragm or film over it. This may also be previously removed by the ice-cream dealer, before introducing the ice-cream cone in the cone holder.

It shall be noted that the cone holder of the invention allows an object to be accommodated therein without involving any space problem and without preventing the stackability of cone holders in mutually inserted relationship.

The above description clearly shows that the dispensing container according to the invention meets the above need while obviating the above prior art drawbacks.

It shall be noted that by placing the object 11 inside the first body 2, the object is safely prevented from coming out of the container.

The container according to the invention may be fabricated by using well-known manufacturing processes, e.g. by injection or molding for plastic cone holders or other processes for polyethylene-coated cardboard cone holders.

Those skilled in the art will obviously appreciate that a number of changes and variants may be made to the cone holder as described hereinbefore, without departure from the scope of the invention, as defined in the following claims.

## Claims

1. A cone holder comprising:
an open hollow body (2) shaped in such a manner as to define a housing (10) for supporting an ice-cream cone (5) partially inserted in said hollow body (2),
**characterized in that said cone holder comprises** a capsule-like container (11) acting as a container for other products/objects, said capsule-like container (11) being removably received in said hollow body (2) in a position in which said capsule-like container (11) does not interfere with said ice-cream cone (5).

2. A cone holder as claimed in claim 1, wherein said hollow body (2) has a top opening (3) through which said ice-cream cone (5) may be partially inserted to be supported thereby, said housing (10) being defined at the lower end of said hollow body (2).

3. A cone holder as claimed in claim 1, wherein said hollow body (2) extends from a bottom wall (9) to a top opening (3) through which said ice-cream cone (5) may be partially inserted to be supported thereby, said housing (10) being defined in the proximity of its bottom wall (9).

4. A cone holder as claimed in claim 2 or 3, wherein said capsule-like container (11) is introduced in the housing (10) through said top opening (3).

5. A cone holder as claimed in any of claims 1 to 4, wherein said hollow body (2) has an essentially truncated cone shape extending in a prevailing axial direction (X-X).

6. A cone holder as claimed in claim 5, wherein said hollow body (2) has an upper portion for containing the portion of the ice-cream cone (5) inserted in the hollow body (2) and a lower portion for containing said capsule-like container (11).

7. A cone holder as claimed in claim 6, wherein said lower and upper portions of said hollow body (2) are separated by a removable partition diaphragm.

8. A cone holder as claimed in claim 7, wherein said diaphragm is a film.

9. A cone holder as claimed in claim 2 or 3, wherein said top opening of said hollow body (2) is closed by a removable film having a bag-like shape to fit the cavity of said hollow body (2) and allow stacking of multiple cone holders in a mutually inserted relationship.

10. A cone holder as claimed in any of claims 1 to 9, wherein said capsule-like container (11) is introduced in said housing (10) of said hollow body (2) by forcing it therein.

## Patentansprüche

1. Waffelhalter, der aufweist:
einen offenen Hohlkörper (2), der in solcher Weise geformt ist, dass er ein Gehäuse (10) definiert, um eine Eiswaffel (5) zu halten, die teilweise in den Hohlkörper (2) eingesteckt ist,
**dadurch gekennzeichnet, dass**
der Waffelhalter aufweist einen kapselartigen Behälter (11), der als Behälter für andere Produkte/Gegenstände dient, wobei der kapselartige Behälter (11) entfernbar in dein Hohlkörper (2) in einer Position aufgenommen wird, in der der kapselartige Behälter (11) nicht mit der Eiswaffel (5) in Konflikt kommt.

2. Waffelhalter gemäß Anspruch 1, wobei der Hohlkörper (2) eine obere Öffnung (3) aufweist, durch die die Eiswaffel (5) teilweise eingesteckt werden kann, um dadurch gehalten zu werden, wobei das Gehäuse (10) am unteren Ende des Hohlkörpers (2) definiert ist.

3. Waffelhalter gemäß Anspruch 1, wobei der Hohlkörper (2) sich von einer unteren Wand (9) zu einer oberen Öffnung (3) erstreckt, durch die die Eiswaffel (5) teilweise eingesteckt werden kann, um dadurch gehalten zu werden, wobei das Gehäuse (10) nahe der unteren Wand (9) davon definiert ist.

4. Waffelhalter gemäß Anspruch 2 oder 3, wobei der kapselartige Behälter (11) in das Gehäuse (10) durch die obere Öffnung (3) eingesteckt wird.

5. Waffelhalter gemäß einem der Ansprüche 1 bis 4, wobei der Hohlkörper (2) eine im Wesentlichen abgeschnittene Konusform aufweist, die sich in einer vorherrschenden axialen Richtung (X-X) erstreckt.

6. Waffelhalter gemäß Anspruch 5, wobei der Hohlkörper (2) einen oberen Bereich zur Aufnahme des Abschnitts der Eiswaffel (5) aufweist, die in den Hohlkörper (2) eingesteckt ist, und einen unteren Bereich, um den kapselartigen Behälter (11) aufzunehmen.

7. Waffelhalter gemäß Anspruch 6, wobei der obere und untere Bereich des Hohlkörpers (2) durch eine entfernbare Trennmembran getrennt sind.

8. Waffelhalter gemäß Anspruch 7, wobei die Membran eine Folie ist.

9. Waffelhalter gemäß Anspruch 2 oder 3, wobei die obere Öffnung des Hohlkörpers (2) durch eine entfernbare Folie geschlossen ist, die eine taschenartige Form hat, um in den Hohlraum des Hohlkörpers (2) zu passen und das Stapeln mehrerer Waffelhalter in ineinandergesteckter Weise zu ermöglichen.

10. Waffelhalter gemäß einem der Ansprüche 1 bis 9, wobei der kapselartige Behälter (11) in das Gehäuse (10) des Hohlkörpers (2) mit Druck eingesteckt wird.

## Revendications

1. Un support pour cornet comportant :
un corps creux ouvert (2) conformé de manière à définir un logement (10) pour supporter un cornet à crème glacée (5) partiellement inséré dans ledit corps creux (2),
**caractérisé en ce que** ledit support pour cornet comporte un récipient (11) de type capsule servant de contenant pour d'autres produits ou objets, ledit récipient (11) de type capsule étant logé de manière amovible dans ledit corps creux (2) dans une position dans laquelle ledit récipient (11) de type capsule n'interfère pas avec ledit cornet à crème glacée (5).

2. Un support pour cornet tel que revendiqué à la revendication 1, dans lequel ledit corps creux (2) comporte une ouverture supérieure (3) à travers laquelle le cornet à crème glacée (5) peut être en partie inséré pour y être supporté, ledit logement (10) étant défini à l'extrémité inférieure dudit corps creux (2).

3. Un support pour cornet tel que revendiqué à la revendication 1, dans lequel ledit corps creux (2) s'étend à partir d'une paroi de fond (9) vers une ouverture supérieure (3) à travers laquelle ledit cornet à crème glacée peut être en partie inséré pour y être supporté, ledit logement (10) étant défini dans le voisinage de sa paroi de fond (9).

4. Un support pour cornet tel que revendiqué aux revendications 2 ou 3, dans lequel ledit récipient de type capsule (11) est introduit dans le logement (10) à travers ladite ouverture supérieure (3).

5. Un support pour cornet tel que revendiqué dans l'une quelconque des revendications 1 à 4, dans lequel ledit corps creux (2) a une forme sensiblement tronconique s'étendant selon une direction axiale prédominante (X-X).

6. Un support pour cornet tel que revendiqué à la revendication 5, dans lequel ledit corps creux (2) comporte une partie supérieure prévue pour recevoir la partie du cornet à crème glacée (5) qui insérée dans le corps creux (2) et une partie inférieure prévue pour recevoir ledit récipient de type capsule (11).

7. Un support pour cornet tel que revendiqué à la revendication 6, dans lequel lesdites parties inférieures et supérieures dudit corps creux (2) sont séparées par un diaphragme séparateur amovible.

8. Un support pour cornet tel que revendiqué à la revendication 7, dans lequel ledit diaphragme est un film.

9. Un support pour cornet tel que revendiqué dans les revendications 2 ou 3, dans lequel ladite ouverture supérieure dudit corps creux (2) est obturée par un film amovible en forme de sachet pour s'ajuster à la cavité dudit corps creux (2) et permettre la superposition de plusieurs supports de cornet dans une relation d'insertion réciproque.

10. Un support pour cornet tel que revendiqué dans l'une quelconque des revendications 1 à 9, dans lequel ledit récipient de type capsule (11) est introduit par forcement dans ledit logement (10) dudit corps creux (2).
